Europäisches Patentamt

European Patent Office

Office européen des brevets

(19)

(11) Numéro de publication : **0 114 775**
**B1**

# (12) FASCICULE DE BREVET EUROPÉEN

(45) Date de publication du fascicule du brevet :
22.10.86

(51) Int. Cl.⁴ : **B 64 F 1/22**

(21) Numéro de dépôt : **84400115.6**

(22) Date de dépôt : **20.01.84**

(54) **Barrière d'arrêt et de guidage pour aéronefs.**

(30) Priorité : **24.01.83 FR 8300981**

(43) Date de publication de la demande :
**01.08.84 Bulletin 84/31**

(45) Mention de la délivrance du brevet :
**22.10.86 Bulletin 86/43**

(84) Etats contractants désignés :
**BE CH DE GB IT LI NL**

(56) Documents cités :
**US-A- 3 674 226**
**US-A- 3 690 599**

(73) Titulaire : **UGEC, Société anonyme**
**15, rue Louis Armand**
**F-77330 Ozoir La Ferriere (FR)**

(72) Inventeur : **Amoretti, Jean-Baptiste**
**11, Avenue d'Italie**
**F-77400 Pomponne (FR)**

(74) Mandataire : **Sauvage, Renée**
**CABINET SAUVAGE 100 bis, avenue de Saint-Mandé**
**F-75012 Paris (FR)**

EP 0 114 775 B1

## Description

La présente invention a pour objet une barrière d'arrêt et de guidage pour aéronefs, d'un type connu, comportant un butoir porteur d'une mire de guidage et contre lequel doit être amené le pare-brise de l'habitacle d'un aéronef venant se placer au droit d'une passerelle de débarquement des passagers, ou sur un point précis d'une plate-forme aéronautique.

La technique qui a été couramment en usage pour le guidage au sol des avions au voisinage de la zone de débarquement des passagers et selon laquelle un technicien, appelé couramment « batman » ou « signaleur », se place devant l'avion et fait des signes conventionnels au pilote, ne donne plus aujourd'hui satisfaction du fait qu'elle est insuffisamment précise. Ce défaut de précision a pu être accepté tant que les aéroports n'étaient pas surchargés. De nos jours, cependant, où le trafic s'est fort intensifié, les conditions de parquage doivent être telles qu'il n'y ait pas de place perdue au voisinage des terminaux et que le débarquement des passagers se fasse au plus vite.

Dans cet esprit, on s'efforce maintenant de faire venir les avions le long des terminaux avec une précision telle que leur(s) porte(s) viennent exactement en vis-à-vis de l'ouverture de pré-passerelles à soufflet dépendant de bâtiments fixes. Cette précision de l'arrêt est obtenue par un guidage optique de l'avion : il est prévu, à cet effet, une barrière comportant un butoir porteur d'une mire de guidage et contre lequel le pilote doit amener le pare-brise de l'habitacle de son appareil.

Le problème de ce mode de guidage est la mise en place du butoir. En effet, sa position doit être variée pour tenir compte de la hauteur de l'avion, de la distance entre son pare-brise et sa porte, et de la distance entre la pré-passerelle et l'axe longitudinal de l'avion : d'un modèle à l'autre, il peut y avoir des différences atteignant 18 mètres en longueur et 10 mètres en hauteur.

A l'heure actuelle, pour résoudre ce problème, soit, à chaque avion annoncé, un technicien règle manuellement la position de la barrière en fonction du type de l'avion en cause avec les risques d'erreurs de manœuvre que cela comporte, soit on affecte un type d'avion particulier à une pré-passerelle particulière équipée d'une barrière réglée une fois pour toutes, ce qui évite d'avoir à changer le réglage mais mobilise parfois inutilement une pré-passerelle.

La présente invention a pour but de remédier à ces inconvénients, but qui est atteint en ce sens qu'elle apporte une barrière constituée de plusieurs éléments montés bout à bout et articulés les uns par rapport aux autres, l'un des éléments d'extrémité étant prolongé par le butoir porteur de la mire de guidage et l'élément d'extrémité opposé étant reçu dans une structure support, ladite barrière comportant un premier groupe de moyens adaptés à permettre le déplacement du butoir dans les trois dimensions et un second groupe de moyens étant prévu pour actionner sélectivement les moyens dudit premier groupe en fonction des caractéristiques particulières de l'aéronef attendu.

Plus particulièrement, le premier groupe de moyens est adapté à permettre respectivement la rotation de la barrière autour d'un axe perpendiculaire au plan sur lequel repose la structure support, son pivotement de part et d'autre d'un axe vertical dans un plan parallèle à l'axe longitudinal de l'aéronef et l'extension ou le repli de ses éléments les uns par rapport aux autres.

La combinaison des mouvements de rotation, de pivotement et d'extension de la barrière permet d'amener le butoir porteur de la mire de guidage exactement là où doit venir se placer le pare-brise de l'avion attendu, quel que soit le modèle de cet avion, pour que la porte de ce dernier soit exactement en vis-à-vis de l'ouverture du soufflet de la pré-passerelle, ou du point de débarquement prévu.

Dans une forme d'exécution de l'invention, les moyens appartenant au premier groupe et permettant la rotation de la barrière comprennent une couronne d'orientation interposée entre la structure support et l'élément d'extrémité opposé à celui qui porte le butoir.

De préférence, cette couronne d'orientation autorise une rotation sur 180°, un angle supérieur étant inutile.

Pour ce qui est des moyens appartenant au premier groupe et permettant respectivement le pivotement de la barrière et l'extension et le repli des éléments les uns par rapport aux autres, ils peuvent être constitués par tout organe d'actionnement à effet réversible, tel qu'un vérin ou une rotule soumise à l'entraînement d'un moteur électrique, avec démultiplicateur.

Avantageusement, le pivotement de la barrière peut se faire sur 90° de chaque côté de l'axe vertical, ce qui donne un éventail de 180°.

Dans une forme d'exécution préférée, la barrière revêt la forme d'un doigt dont les éléments constituent les phalanges. Les mouvements d'extension et de repli de la barrière sont, dans ce cas, semblables à ceux d'un doigt.

Afin de conserver à la mire de guidage son efficacité, le butoir est monté sur l'élément d'extrémité dont il dépend par l'intermédiaire d'un dispositif assurant le maintien horizontal de ce butoir, quelle que soit la position des éléments de la barrière.

Il est avantageux que l'acheminement final de l'avion puisse être fait aussi bien par le copilote que par le pilote et, à cet effet, le butoir porte une mire de guidage double corrigeant l'erreur de parallaxe provoquée par l'écartement entre les sièges des pilote et copilote, et par conséquent* entre les points d'observation des mires de guidage, variables selon les types d'appareil. Pour tenir compte de cet écartement variable, le premier groupe de moyens selon l'invention comporte, de préférence, des moyens permettant de faire varier l'écartement entre les mires de guidage.

Pour adapter la barrière au cas des petits avions qui viennent se ranger selon le même axe longitudinal que les gros avions, et dont l'habitacle se trouve donc plus éloigné de la structure de support de la barrière que celui des gros avions, il est préférable que l'élément d'extrémité prolongé par le butoir soit télescopique.

Le second groupe de moyens actionnant sélectivement les moyens du premier groupe en fonction des caractéristiques particulières de l'aéronef attendu est avantageusement constitué, d'une part, par une servo-commande dans la mémoire de laquelle sont stockées les modalités d'actionnement de chaque moyen du premier groupe (rotation, pivotement, extension des éléments de la barrière ; écartement des mires de guidage) en fonction de chaque type d'aéronef et, d'autre part, une centrale sous le contrôle de cette servo-commande et susceptible d'agir sur les moyens du premier groupe.

Le principe de fonctionnement de l'ensemble est que, lorsque la servo-commande reçoit un ordre correspondant à un type d'aéronef, elle agit en conséquence sur la centrale pour que cette dernière amène le butoir porteur de la mire de guidage dans la position voulue. Il est bien entendu prévu des sécurités que l'on décrira brièvement plus loin.

Afin de ne pas avoir à maintenir constante l'orientation de la mire de guidage pour que la partie utile de la mire soit toujours exposée au regard du pilote et du copilote, il est avantageux que cette mire soit cylindrique et que la partie utile de cette mire affecte toute sa périphérie.

Une forme d'exécution de l'invention est décrite ci-après à titre d'exemple, non limitatif, en référence aux dessins annexés dans lesquels :

les figures 1 et 2 sont respectivement des vues en perspective de face et de 3/4 d'un avion guidé et arrêté selon l'invention,

la figure 3 est une vue de côté de la barrière en position de repos,

les figures 4 et 5 sont des vues schématiques respectivement de face et de côté d'avions de taille différente rangés le long d'un bâtiment, montrant également les secteurs d'évolution de face par type d'aéronef,

la figure 6 est une vue schématique de la barrière en position de travail pour le guidage et l'arrêt d'un DC8 venant se ranger selon un axe déporté par rapport à l'axe avions,

la figure 7 montre les secteurs d'évolution de dessus, par type d'aéronef, et

la figure 8 montre les secteurs d'évolution de côté, par type d'aéronef.

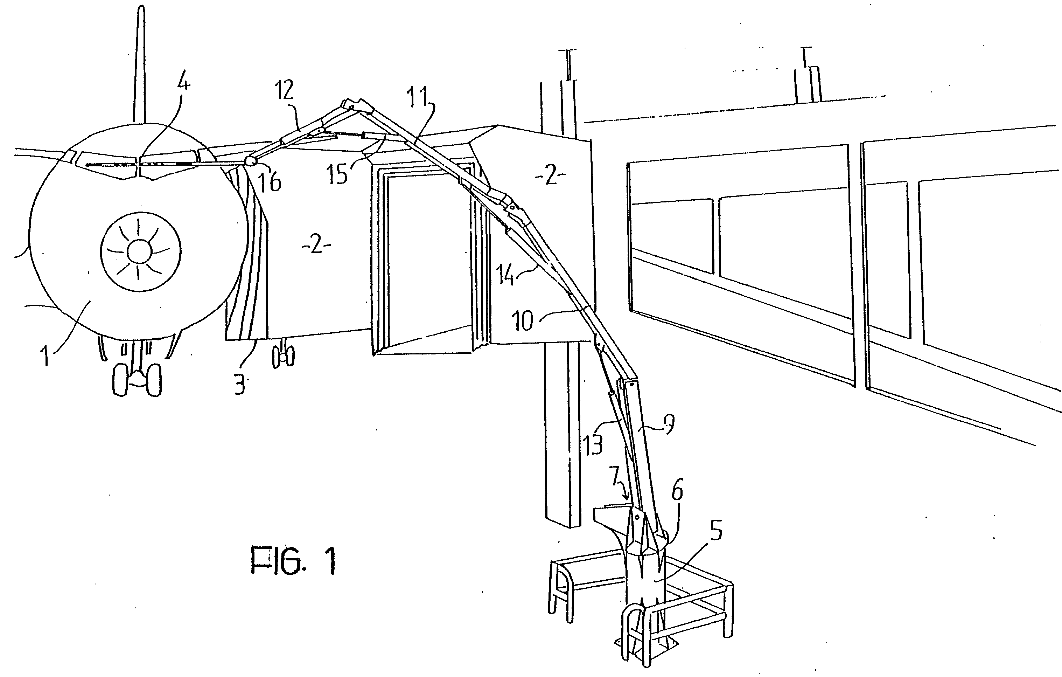

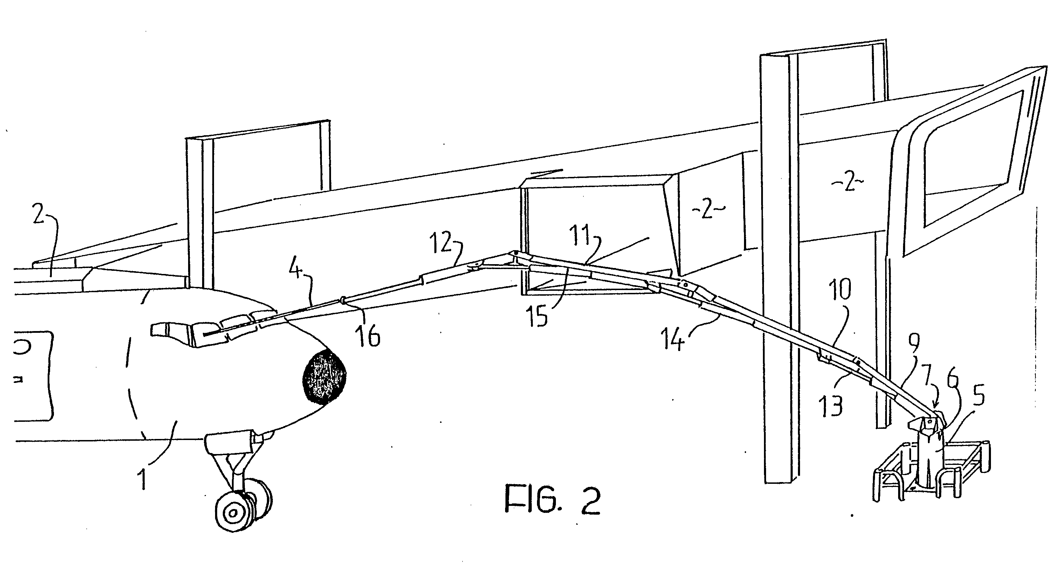

Si l'on se réfère aux figures 1 et 2, on voit un avion 1 arrêté le long d'un bâtiment fixe comportant deux pré-passerelles 2 dont l'une est en vis-à-vis de la porte (non visible sur la figure) de l'avion et reliée à cette porte par un soufflet 3. Le pare-brise de l'habitacle de l'avion se trouve appuyé contre un butoir 4 en alliage léger ou en fibres porteur d'une double mire de guidage à écartement variable et qui dépend de la barrière selon l'invention.

De préférence, la double mire est cylindrique et sa surface utile s'étend sur toute sa périphérie, ce qui évite d'avoir à maintenir son orientation telle que sa surface utile soit toujours convenablement dirigée vers le pilote et le copilote de l'avion attendu.

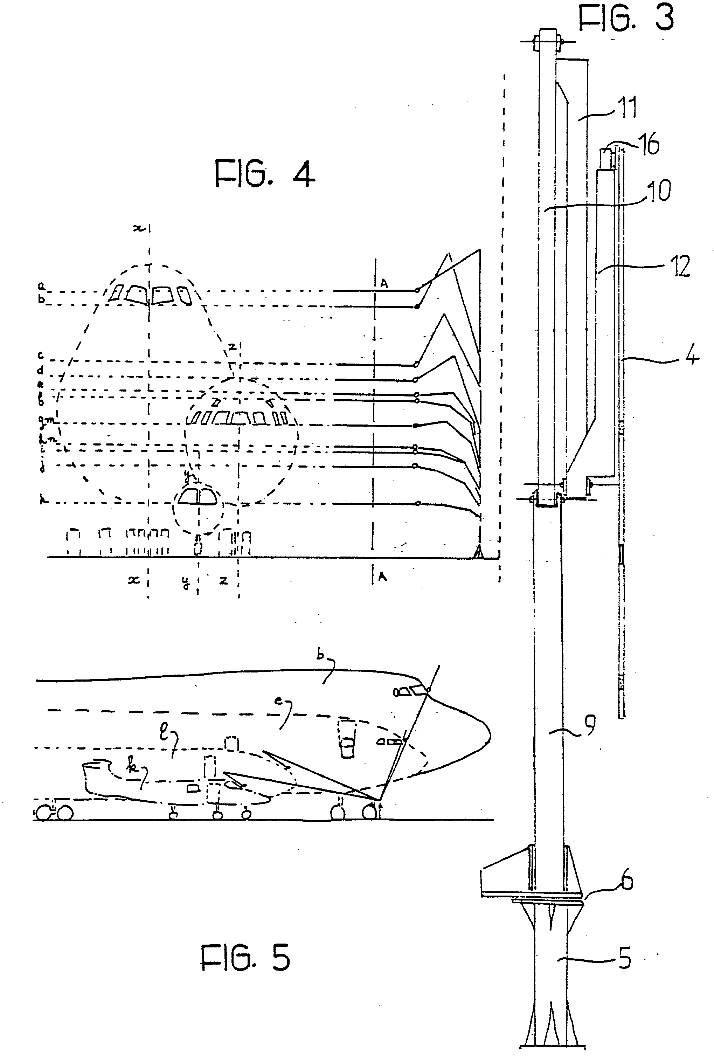

Comme il ressort des figures 4, 5 et 7, le butoir 4 occupe une position tout à fait différente selon le modèle de l'avion.

La barrière selon l'invention va maintenant être décrite en détail :

Sa base est constituée d'une colonne en acier 5 munie de renforts et dont la hauteur est fonction de l'endroit où elle est placée par rapport aux pré-passerelles 2. Sur la partie supérieure de cette colonne 5 est prévu un plateau muni de roues crémaillères ou une couronne d'orientation 6 qui permet à l'ensemble de la barrière d'effectuer une rotation sur 180°.

Entre l'élément d'extrémité inférieur 9 de la barrière et cette couronne d'orientation 6, est disposé un dispositif de basculement 7 compris entre deux flans munis de raidisseurs ayant une forme s'inspirant de celle de la tourelle d'un char, et qui est constitué d'un vérin dont l'extrémité agit sur des cames de profil approprié. Ce dispositif permet à la barrière de basculer ou de pivoter de part et d'autre de l'axe vertical sur un angle de 90°, soit au total 180°, dans un plan parallèle à l'axe longitudinal de l'avion.

La barrière proprement dite revêt la forme d'un doigt à quatre phalanges 9, 10, 11 et 12 en acier ou en alliage léger montées bout à bout et articulées les unes par rapport aux autres. Au niveau de chaque articulation, il est prévu un vérin hydraulique, respectivement, 13, 14 et 15, prenant appui sur les extrémités voisines de chaque couple de phalanges.

A titre d'exemple, la 1$^{re}$ phalange a une longueur de 2 m, la 2$^e$ de 3,60 m, la 3$^e$ de 3,50 m et la 4$^e$, qui est télescopique, une longueur variant entre 2 m et 3,50 m.

Les 2$^e$, 3$^e$ et 4$^e$ phalanges travaillent dans des plans perpendiculaires à l'axe longitudinal de l'avion.

La 4$^e$ phalange 12 se prolonge par le butoir 4, qui est monté sur la phalange par l'intermédiaire d'une couronne 16 permettant, quelle que soit la position des éléments de la barrière, d'avoir le butoir 4 toujours parallèle au sol, c'est-à-dire dans l'axe de l'habitacle de l'aéronef.

Afin de permettre un repli plus compact de la barrière, lorsque la barrière n'est pas utilisée, les 3$^e$ et 4$^e$ phalanges ne sont pas dans l'alignement des deux autres.

La position de repos du dispositif ressort clairement de la figure 3.

Il est prévu un dispositif de commande séparé pour la barrière selon l'invention, dispositif qui comprend une centrale hydraulique et une servo-commande que l'on décrira dans son principe à propos du fonctionnement de la barrière.

La barrière étant dans la position de repos indiquée plus haut, lorsqu'un aéronef est signalé à l'affichage, un contact est créé au niveau de la logique et l'information correspondante passe au travers d'un comparateur dont le rôle est d'analyser si l'information en cause est exacte ou non, avant que celle-ci soit traduite en ordres agissant sur la centrale hydraulique et donc provoquant le déploiement de la barrière.

Ainsi, par exemple, si un Airbus 310 est signalé et que l'affichage donné soit A 309 au lieu de A 310, le comparateur, après avoir analysé le message erroné, l'annule et, par retour, allume une verrine « erreur ».

Si l'affichage est correct, le comparateur donne les ordres nécessaires à la servo-commande qui, d'une part, agit sur la centrale hydraulique pour déplier la barrière et, d'autre part, déclenche une séquence de recherche de la localisation voulue pour le butoir 4 et l'écartement voulu pour les mires de guidage ; cet écartement pouvant être obtenu au moyen d'un vérin agissant sur un système de tubes télescopiques.

La barrière se déploie comme suit : l'ensemble butoir 4/4ᵉ et 3ᵉ phalanges 11 et 12 pivote d'un bloc sur l'extrémité de la 2ᵉ phalange 10, la 4ᵉ phalange 12 et le butoir 4 pivotent ensuite d'un bloc sur l'extrémité de la 3ᵉ phalange 11 et, enfin, le butoir 4 pivote sur l'extrémité de la 4ᵉ phalange 12.

Pour empêcher que, par suite de fuite dans le circuit hydraulique, la barrière change de position une fois le butoir correctement positionné, ou pour y remédier, il est prévu un système de sécurité qui soit compense les fuites mineures, soit déclenche un signal « danger » si la fuite n'est pas compensable.

Lorsque le butoir occupe la position voulue, des contacts prévus sur la barrière renvoient une information au comparateur qui, après analyse, accepte ou refuse le positionnement. Si le positionnement est refusé le comparateur envoie les informations nécessaires pour la correction du positionnement à la servo-commande et le cycle est répété.

Lorsque la manœuvre de positionnement est terminée, l'avion peut venir se ranger le long du bâtiment, le système de mires de guidage prévu sur le butoir 4 permettant tant au pilote qu'au copilote d'aligner l'aéronef et de le faire avancer jusqu'au moment où l'habitacle de celui-ci vient en contact avec le butoir 4.

Une fois que les passagers ont quitté l'avion et que celui-ci s'est éloigné de la zone de débarquement, il suffit de presser sur un bouton « acquittement » pour effacer toutes les données et pour que le comparateur envoie les informations nécessaires au retour de la barrière à la position de repos, en suivant une séquence de repliage inverse de la séquence de déploiement.

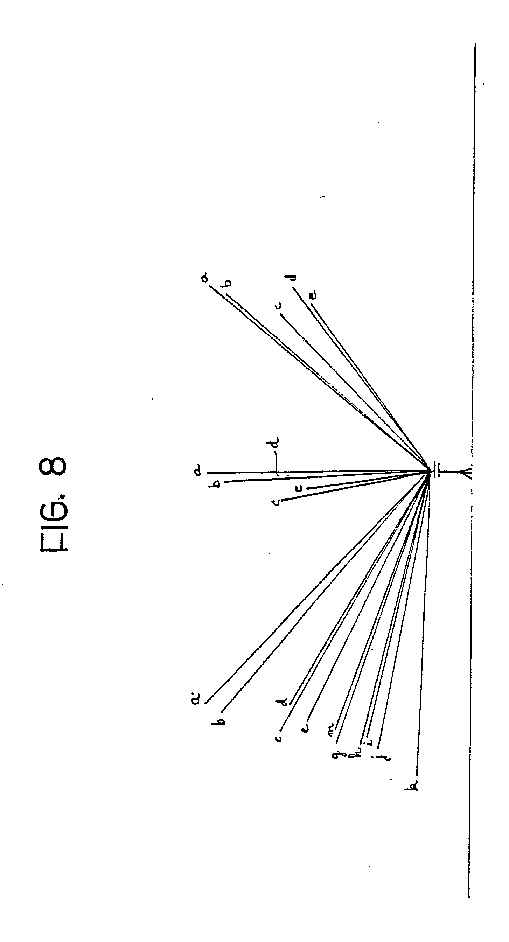

Les figures 4, 5, 7 et 8 montrent différentes positions possibles de la barrière en fonction du type d'aéronef. Sur ces figures, ces aéronefs sont identifiés comme suit :

a : C 5 A
b : 747
c : DC 10
d : L 1011
e : A 3 B
f : 767
g : 707
h : 727
i : 737
j : BAC 111
k : Learjet
l : caravelle
m : DC 8
n : DC 9.

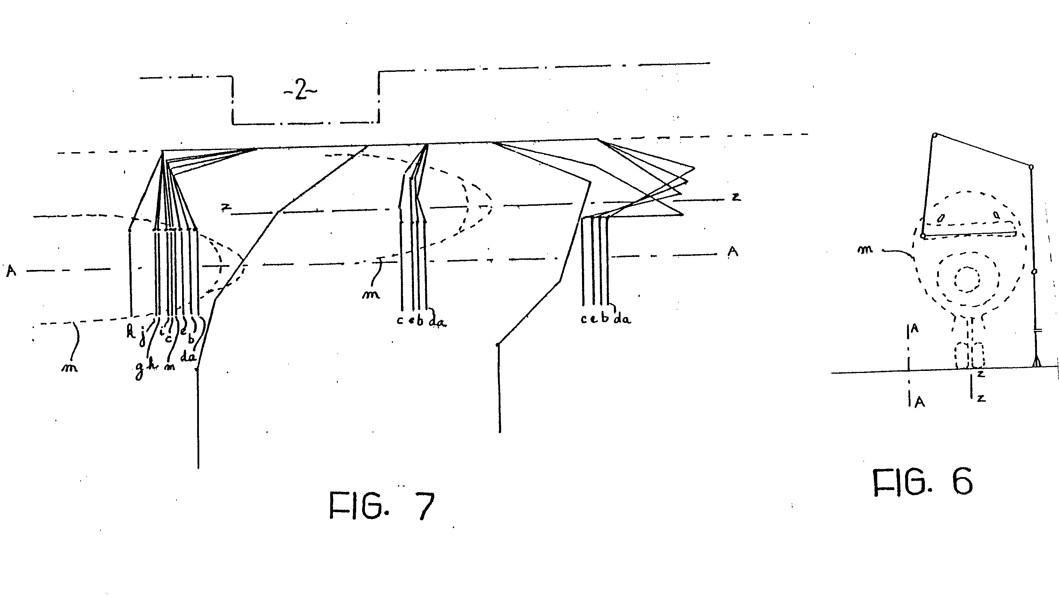

Comme il ressort de la figure 4 et 7, grâce à l'invention, il est possible de faire ranger les aéronefs selon un axe x, y, z qui est déporté par rapport à l'axe des avions A.A selon lequel se placent à l'heure actuelle tous les aéronefs quelle que soit leur taille. Il est ainsi possible de réduire la longueur des soufflets équipant les pré-passerelles.

A titre d'exemple, la position de face de la barrière dans le cas d'un DC 8 rangé selon l'axe déporté zz est représentée à la figure 6.

Il est bien entendu que la présente invention n'est pas limitée à la forme d'exécution décrite et représentée. En particulier, la structure support pourrait ne pas être fixée au sol mais, par exemple, sur une pré-passerelle, auquel cas la colonne 5 pourrait être éventuellement supprimée, celle-ci n'ayant qu'un rôle de compensation de hauteur.

Enfin, au lieu des commandes hydrauliques utilisées dans la forme d'exécution représentée aux dessins, on pourrait avoir recours à tout autre moyen approprié, par exemple des vérins mécaniques ou pneumatiques, des moteurs électriques, etc.

**Revendications**

1. Barrière d'arrêt et de guidage pour aéronefs, du type comportant un butoir (4) porteur de mire de guidage contre lequel doit être amené le pare-brise de l'habitacle d'un aéronef (1) venant se placer au droit d'une plate-forme de débarquement des passagers ou d'un point précis sur une aire de stationnement, caractérisé en ce qu'elle est constituée de plusieurs éléments (9, 10, 11 et 12) montés bout à bout et articulés les uns par rapport aux autres, l'un des éléments d'extrémité (12) étant prolongé par ledit butoir (4) et l'élément d'extrémité opposé (9) étant reçu dans une structure support (5), ladite barrière comportant un premier groupe de moyens (6, 7, 13, 14, 15) adaptés à permettre le déplacement du butoir (4) dans les trois dimensions et un second groupe de moyens étant prévu pour actionner sélectivement les moyens (6, 7, 13, 14, 15) dudit premier groupe en fonction des caractéristiques particulières de l'aéronef attendu (1).

2. Barrière selon la revendication 1, caractérisée en ce que les moyens dudit premier groupe sont adaptés à permettre respectivement la rotation de la barrière autour d'un axe perpendiculaire au plan sur lequel repose la structure support (5), son pivotement de part et d'autre d'un axe vertical dans un plan parallèle à l'axe longitudinal de l'aéronef (1) et l'extension ou le repli de ses éléments (9, 10, 11, 12) les uns par rapport aux autres.

3. Barrière selon la revendication 1 ou 2, caractérisée en ce que les moyens appartenant au premier groupe et permettant la rotation de la barrière comprennent une couronne d'orientation (6) interposée entre la structure support (5) et l'élément d'extrémité (9) opposé à celui qui porte le butoir (4).

4. Barrière selon l'une quelconque des revendications 1 à 3, caractérisée en ce que les moyens appartenant au premier groupe et permettant respectivement le pivotement de la barrière, l'extension et le repli des éléments (9, 10, 11, 12) les uns par rapport aux autres sont des organes d'actionnement à effet réversible (13, 14, 15).

5. Barrière selon l'une quelconque des revendications 1 à 4, caractérisée en ce que la barrière revêt la forme d'un doigt dont les éléments (9, 10, 11 et 12) constituent les phalanges.

6. Barrière selon l'une quelconque des revendications 1 à 5, caractérisée en ce que le butoir (4) est monté sur l'élément d'extrémité (12) dont il dépend par l'intermédiaire d'un dispositif (16) assurant le maintien horizontal de ce butoir (4), quelle que soit la position des éléments (9, 10, 11 et 12) de la barrière.

7. Barrière selon l'une quelconque des revendications 1 à 6, caractérisée en ce que le butoir (4) porte une mire de guidage double et en ce que ledit premier groupe de moyens comporte des moyens permettant de faire varier l'écartement entre les deux mires de guidage.

8. Barrière selon l'une quelconque des revendications 1 à 7, caractérisée en ce que l'élément d'extrémité (12) prolongé par le butoir (4) est télescopique.

9. Barrière selon l'une quelconque des revendications 1 à 8, caractérisée en ce que le second groupe de moyens actionnant sélectivement les moyens du premier groupe en fonction des caractéristiques particulières de l'aéronef attendu (1) est constitué, d'une part, par une servo-commande dans la mémoire de laquelle sont stockées les modalités d'actionnement de chaque moyen du premier groupe en fonction de chaque type d'aéronef et, d'autre part, une centrale sous le contrôle de la servo-commande et susceptible d'agir sur les moyens du premier groupe.

10. Barrière selon l'une quelconque des revendications 1 à 9, caractérisée en ce que la mire de guidage est cylindrique et sa partie utile s'étend sur toute sa périphérie.

**Claims**

1. A stop and guide barrier for aircraft, of the type comprising a stop (4) carrying a guide pattern against which must be brought the windscreen of the cabin of an aircraft coming into position at right angles to a platform for the debarkation of passengers or a precise point on a parking area, characterized in that it is formed from several elements (9, 10, 11 and 12) mounted end to end and hinged to each other, one of the endmost elements (12) being extended by said stop (4) and the opposite endmost element (9) being received in a support structure (5), said barrier comprising a first assembly of means (6, 7, 13, 14, 15) adapted to allow the stop (4) to move in three dimensions and a second assembly of means being provided for selectively actuating the means (6, 7, 13, 14, 15) of said first assembly depending on the particular characteristics of the aircraft expected (1).

2. The barrier according to claim 1, characterized in that the means of said first assembly are adapted for allowing respectively the rotation of the barrier about an axis perpendicular to the plane on which the support structure (5) rests, pivoting thereof on each side of a vertical axis in a plane parallel to the longitudinal axis of the aircraft (1) and the extension or retraction of the elements (9, 10, 11, 12) with respect to each other.

3. The barrier according to claim 1 or 2, characterized in that the means belonging to the first assembly providing rotation of the barrier comprise an orientation ring (6) interposed between the support structure (5) and the endmost element (9) opposite the one which carries the stop (4).

4. The barrier according to any one of claims 1 to 3, characterized in that the means belonging to the first assembly providing respectively pivoting of the barrier, the extension and retraction of the elements (9, 10, 11, 12) with respect to each other are actuating members with reversible action (13, 14, 15).

5. The barrier according to any one of claims 1 to 4, characterized in that the barrier has the shape of a finger whose elements (9, 10, 11 and 12) form the phalanges.

6. The barrier according to any one of claims 1 to 5, characterized in that the stop (4) is mounted on the end most element (12) from which it depends through a device (16) ensuring that this stop (4) is held horizontal whatever the position of the elements (9, 10, 11 and 12) of the barrier.

7. The barrier according to any one of claims 1 to 6, characterized in that the stop (4) has a double guide pattern and in that said first assembly of means comprises means for varying the spacing between the two guide patterns.

8. The barrier according to any one of claims 1 to 7, characterized in that the endmost element (12) extended by the stop (4) is telescopic.

9. The barrier according to any one of claims 1 to 8, characterized in that the second assembly of means actuating selectively the means of the first assembly depending on the particular characteristics of the aircraft expected (1) is formed, on the one hand, by a servo-control in the memory of which are stored the conditions for actuating each means of the first assembly as a function of each type of aircraft and, on the other hand, a central post under the control of the servo-control and adapted to act on the means of the first assembly.

10. The barrier according to any one of claims 1 to 9, characterized in that the guide pattern is cylindrical and its useful part extends over the whole of its periphery.

**Patentansprüche**

1. Fang- und Führungseinrichtung für Flugzeuge mit einem, eine Visiereinrichtung zum Lenken tragenden Abweiser (4), gegen den die Windschutzscheibe des Cockpit eines Flugzeuges (1) zu führen ist, welches sich an die Stelle einer Abflugplattform für Passagiere oder auf einen genauen Punkt auf einer Parkfläche stellt, dadurch gekennzeichnet, daß die Einrichtung aus mehreren Elementen (9, 10, 11 und 12), besteht, die endweise befestigt und gegenseitig verschwenkbar sind, daß eines der Endelemente (12) durch den Abweiser (4) verlängert ist und das gegenüberliegende Endelement (9) von einer Haltekonstruktion (5) aufgenommen ist, daß die Einrichtung eine erste Gruppe von Mitteln (6, 7, 13, 14, 15), die die Bewegung des Abweisers (4) in den drei Dimensionen ermöglicht, und eine zweite Gruppe von Mitteln umfaßt, die vorgesehen sind, um die Mittel (6, 7, 13, 14, 15) der ersten Gruppe in Funktion von besonderen Merkmalen des erwarteten Flugzeuges (1) wahlweise zu betätigen.

2. Einrichtung nach Anspruch 1, dadurch gekennzeichnet, daß die Mittel der ersten Gruppe jeweils die Drehung der Einrichtung um eine zu der Ebene, auf der die Haltekonstruktion (5) ruht, senkrechten Achse, die Verschwenkung der Einrichtung auf beiden Seiten einer Achse, die senkrecht auf einer zu der Längsachse des Flugzeuges (1) parallelen Ebene steht, und das Ausfahren oder Einziehen der Elemente (9, 10, 11, 12) der Einrichtung relativ zueinander ermöglicht.

3. Einrichtung nach Anspruch 1 oder 2, dadurch gekennzeichnet, daß die zu der ersten Gruppe gehörenden und die Drehung der Einrichtung ermöglichenden Mittel einen Orientierungsring (6) umfassen, der zwischen der Haltekonstruktion (5) und dem Endelement (9) angeordnet ist, welches zu dem den Abweiser (4) tragenden entgegengesetzt ist.

4. Einrichtung nach einem der Ansprüche 1 bis 3, dadurch gekennzeichnet, daß die zur ersten Gruppe gehörenden und die Verschwenkung der Einrichtung bzw. das Ausfahren und Zurückholen der Elemente (9, 10, 11, 12) in Bezug zueinander ermöglichenden Mittel Betätigungsorgane (13, 14, 15) mit umkehrbarer Wirkung sind.

5. Einrichtung nach einem der Ansprüche 1 bis 4, dadurch gekennzeichnet, daß die Einrichtung die Form eines Fingers zeigt, dessen Elemente (9, 10, 11 und 12) die Fingerglieder bilden.

6. Einrichtung nach einem der Ansprüche 1 bis 5, dadurch gekennzeichnet, daß der Abweiser (4) an dem Endelement (12) angebracht ist, von dem er über eine Vorrichtung (16) abhängt, die die horizontale Haltung dieses Abweisers (4) sicherstellt, wie auch immer die Lage der Elemente (9, 10, 11 und 12) der Einrichtung sein mag.

7. Einrichtung nach einem der Ansprüche 1 bis 6, dadurch gekennzeichnet, daß der Abweiser (4) eine doppelte Visiereinrichtung zum Lenken trägt und daß die erste Gruppe von Mitteln Mittel umfaßt, die den Abstand zwischen den zwei Visiereinrichtungen zum Lenken verändern kann.

8. Einrichtung nach einem der Ansprüche 1 bis 7, dadurch gekennzeichnet, daß das durch den Abweiser (4) verlängerte Endelement (12) teleskopisch ist.

9. Einrichtung nach einem der Ansprüche 1 bis 8, dadurch gekennzeichnet, daß die zweite Gruppe von Mitteln, die die Mittel der ersten Gruppe in Funktion von besonderen Merkmalen des erwarteten Flugzeuges (1) wahlweise betätigt, einerseits von einer Servosteuerung, in deren Speicher die Betätigungseinzelheiten für jedes Mittel der ersten Gruppe in Abhängigkeit von jedem Flugzeugtyp gespeichert sind, und andererseits von einer Zentrale gebildet ist, die unter der Steuerung der Servosteuerung steht und auf die Mittel der ersten Gruppe wirken kann.

10. Einrichtung nach einem der Ansprüche 1 bis 9, dadurch gekennzeichnet, daß die Visiereinrichtung zum Lenken zylindrisch ist und sich ihr nützlicher Abschnitt über den gesamten Umfang erstreckt.

FIG. 1

FIG. 2

0 114 775

FIG. 3

FIG. 4

FIG. 5

FIG. 6

FIG. 7

FIG. 8